# EUROPEAN PATENT APPLICATION

(11) **EP 4 656 915 A1**
(43) Date of publication of application: **03.12.2025**
(21) Application number: 25168451.0
(22) Date of filing: 04.04.2025
(51) Int. Cl.: F16K 11/085, F16K 11/22, F16K 31/04, F16K 31/54, F16K 31/05, B60K 11/02, F04C 2/16

(54) **MANIFOLD**

(30) Priority: 30.05.2024 JP 2024087953
(71) Applicant: Aisin Corporation, Kariya, Aichi 448-8650 (JP)
(72) Inventor: KATAOKA, Akihiro, Kariya 448-8650 (JP); NAGATA, Eiri, Kariya 448-8650 (JP); KUROZUMI, Takashi, Kariya 448-8650 (JP); YOSHIDA, Masamichi, Kariya 448-8650 (JP); SHIMMI, Kensuke, Kariya 448-8650 (JP)
(74) Representative: Kramer Barske Schmidtchen Patentanwälte PartG mbB

(57) **Abstract**

A manifold (A) includes a housing (H) having a plurality of flow paths formed therein and an input port that receives a fluid flowing into the flow paths, wherein a screw pump (P) that sends the fluid flowing in from the input port (1) to the flow path, and a flow path switching valve (V) that controls a flow of the fluid flowing through the flow path are accommodated in the housing (H).

## Description

### TECHNICAL FIELD

The present disclosure relates to a manifold.

### BACKGROUND DISCUSSION

JP 2018-197526 A discloses a configuration that enables switching between a mode in which a liquid flowing in from an inflow pipe is fed out from a first outlet pipe by rotation of an impeller and a mode in which a liquid flowing in from an inflow pipe is fed out from a second outlet pipe by control of rotation of a motor unit.

Further, WO 2020/246421 A discloses a configuration for controlling a flow of cooling water by including a main body, a rotary valve accommodated inside the main body, and an actuator device on the upper part of the main body.

The rotary valve described in WO 2020/246421 A includes a plurality of inflow portions through which cooling water flows into an outer periphery of a main body and a plurality of outflow portions through which the cooling water flows out, and an actuator device controls rotation of the rotary valve to control outflow of the cooling water.

For example, in order to adjust the temperature of an electric motor for traveling and a battery that supplies electric power to the electric motor in a vehicle, a manifold capable of controlling the flow of a fluid for temperature adjustment in a plurality of flow paths may be required. In the configuration of JP 2018-197526 A, although the fluid can be pressure-fed from the first outlet pipe, the fluid cannot be pressure-fed from the second outlet pipe. That is, when the configuration of JP 2018-197526 A is used, the liquid cannot be pressure fed to a plurality of flow paths, and it is difficult to use the configuration in applications requiring pumping of fluid.

On the other hand, in the configuration of WO 2020/246421 A, although the fluid can be pressure-fed from a plurality of outlets, a pump is disposed outside. Therefore, when the configuration of WO 2020/246421 A is used, a flow path for supplying the fluid from the pump to the main body of the rotary valve is required, and there is a concern that an increase in the size of the manifold is caused.

In order to solve this problem, it is also possible to attach a pump to an outer face of a housing constituting a manifold. However, it cannot be said that the present disclosure is effective for downsizing the entire manifold, and there is room for improvement.

A need thus exists for a manifold capable of sending a fluid in a pressurized state to a selected flow path and reducing the size.

### SUMMARY

A characteristic configuration of a manifold according to the present disclosure is that the manifold includes a housing having a plurality of flow paths formed therein and an input port that receives a fluid flowing into the flow paths, wherein a screw pump that sends the fluid flowing in from the input port to the flow path, and a flow path switching valve that controls a flow of the fluid flowing through the flow path are accommodated in the housing.

According to this configuration, the fluid received from the input port is pressurized by the screw pump accommodated in the housing and sent to the flow path switching valve, and the flow path switching valve controls the flow of the fluid, whereby the fluid can be pressure-fed to the flow path selected from the plurality of flow paths. In addition, the screw pump can have a smaller diameter than a pump having an impeller, and can suppress an increase in size of the housing. Therefore, a manifold capable of sending a fluid in a pressurized state to the selected flow path and reducing the size was formed.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a plan view of a manifold;
Fig. 2 is a longitudinal sectional view of a manifold;
Fig. 3 is an exploded perspective view of a manifold;
Fig. 4 is a front view of a manifold of another embodiment (a);
Fig. 5 is a plan view of a manifold of another embodiment (a);
Fig. 6 is a view illustrating a screw pump of another embodiment (a);
Fig. 7 is a front view of a manifold of another embodiment (b);
Fig. 8 is a plan view of a manifold of another embodiment (b);
Fig. 9 is a front view of a manifold of another embodiment (c);
Fig. 10 is a plan view of a manifold of another embodiment (c);
Fig. 11 is a front view of a manifold of another embodiment (d); and
Fig. 12 is a plan view of a manifold of another embodiment (d).

### DETAILED DESCRIPTION

Hereinafter, embodiments of a manifold according to the present disclosure will be described with reference to the drawings. The present embodiment describes, as an example of a manifold, a manifold that controls a flow of a fluid supplied to a traveling motor of a vehicle, a battery, and the like. However, the manifold is not limited to the following embodiments, and various modifications can be made without departing from the gist thereof.

### [Basic configuration]

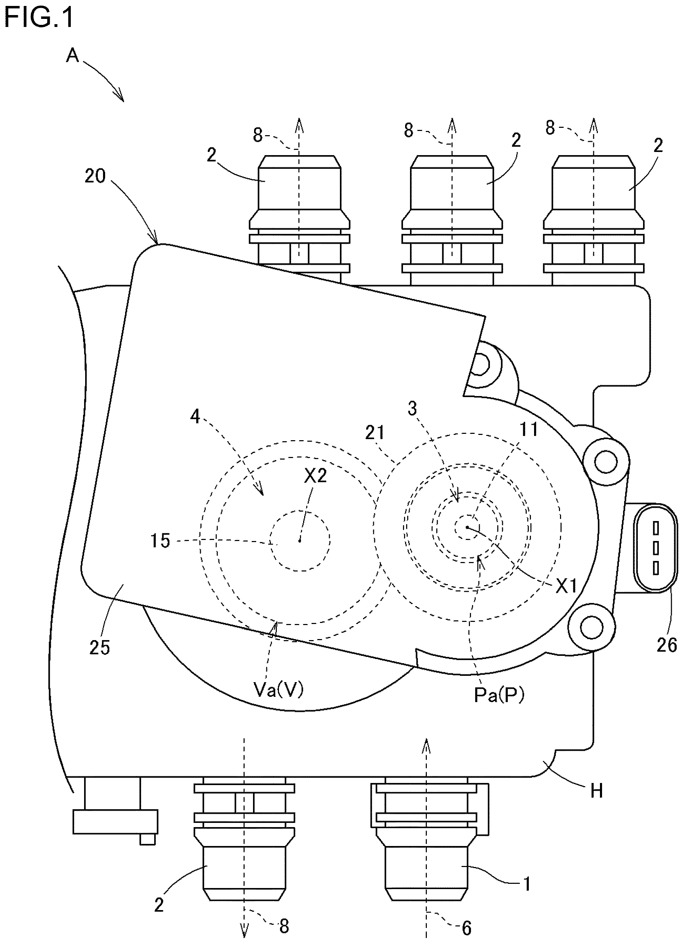

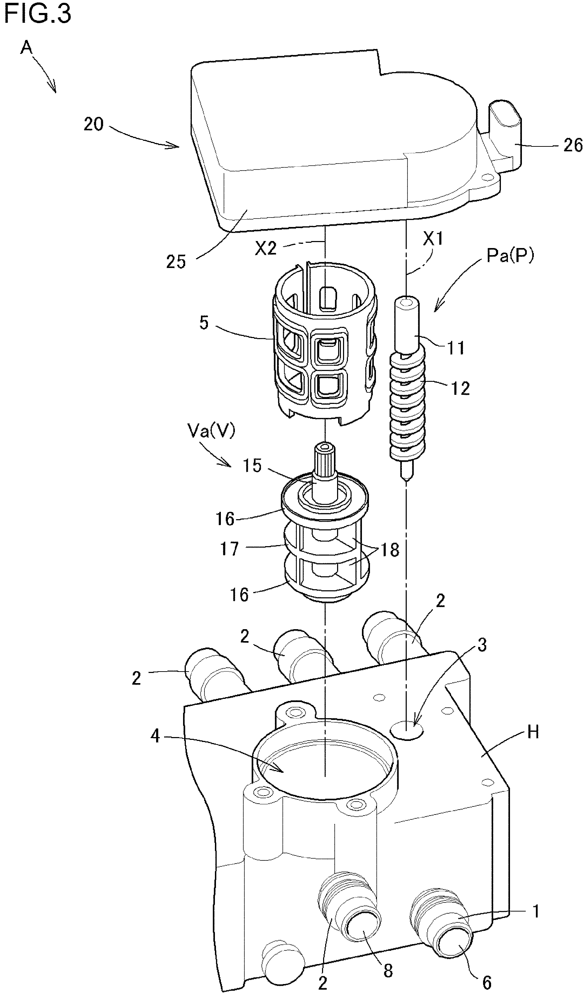

As illustrated in Figs. 1 to 3, a manifold A is configured such that a screw pump P and a flow path switching valve V are accommodated in a housing H including one input port 1 and a plurality of output ports 2, and a control unit 20 is integrated with an upper face of the housing H.

The manifold A feeds the fluid sucked from the input port 1 by driving of the screw pump P to an intermediate flow path 7 in a pressurized state, and further feeds the fluid from the intermediate flow path 7 from the flow path switching valve V to any of the plurality of discharge-side flow paths 8 (an example of the flow path). The discharge-side flow path 8 is connected to any of the output ports 2, and feeds the fluid in the pressurized state from the output port 2.

In the manifold A, the number of input ports 1 and the number of output ports 2 are not limited to the numbers illustrated in the drawings, and any number of manifold A can be provided.

The manifold A is mounted on an electric vehicle (hereinafter, it may be referred to as an electric vehicle) that travels by electric power. The manifold A selects at least one of temperature adjustment targets (not illustrated) such as a battery, an inverter, and a traveling motor mounted on an electric vehicle, and supplies a fluid to achieve temperature adjustment of the selected temperature adjustment target.

The traveling motor is a traveling drive source that operates when electric power is supplied. The inverter generates a three-phase alternating current from a direct current supplied from the battery, and controls the traveling by the traveling motor by controlling the frequency and the like. The battery is configured as a chargeable and dischargeable secondary battery, and supplies a direct current to the inverter.

Specifically, the performance of the battery changes depending on the temperature, and the temperature rises during discharging. Therefore, the battery includes a heat exchange unit, and the manifold A maintains the battery at optimum performance by supplying the temperature-controlled fluid from the output port 2 to the heat exchange unit.

The manifold A not only realizes the supply of the fluid to the heat exchanger of the battery by the control of the flow path switching valve V, but also adjusts the supply amount per unit time of the fluid flowing to the discharge-side flow path 8 by adjusting the opening.

Examples of the electric vehicle include a hybrid electric vehicle (HEV), a plug-in hybrid electric vehicle (PHEV), a battery electric vehicle (BEV), a fuel cell electric vehicle (FCEV), and the like.

As the fluid, a long life coolant (LLC) or the like is used. The fluid is not limited to a cooling fluid such as a long life coolant (LLC), and may be an insulating oil such as paraffin, or a refrigerant such as hydrofluorocarbon (HFC) or hydrofluoroolefin (HFO).

### [Manifold]

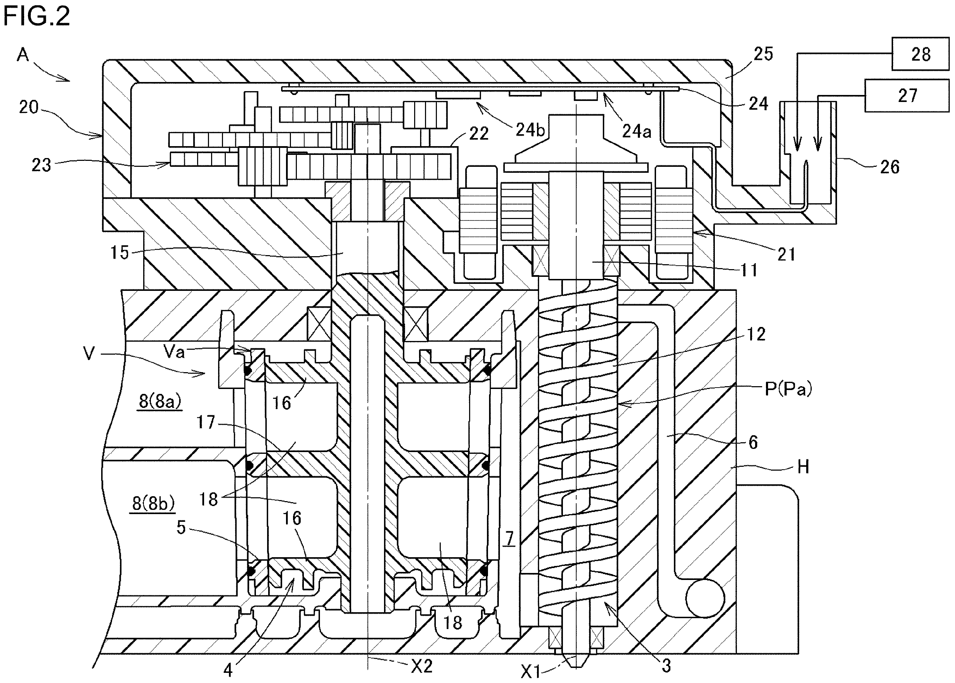

The manifold A is used in the posture illustrated in Fig. 2, and the positional relationship of each part will be described according to the vertical direction illustrated in Fig. 2.

As illustrated in Figs. 1 to 3, in the housing H, a cylindrical pump space 3 centered on a pump axis X1 in a vertical posture and a cylindrical valve space 4 centered on a valve axis X2 in a vertical posture parallel to the pump axis X1 are formed.

The screw pump P has a structure in which a screw body Pa is accommodated in the pump space 3 so as to be rotatable about the pump axis X1. The screw body Pa has a spiral screw portion 12 is formed on the outer periphery of the pump shaft 11. In the screw pump P, the outer periphery of the screw portion 12 is close to the inner periphery of the pump space 3.

In the screw pump P, the screw body Pa rotates about the X1 by rotational driving of a pump drive motor 21 (an example of a pump drive unit). By this rotation, the screw pump P sends the fluid to the lower side and sends the fluid to the intermediate flow path 7 in a pressurized state.

The flow path switching valve V has a structure in which a seal body 5 accommodated in the valve space 4 and a valve body Va rotatably around a valve axis X2 are accommodated in an inner periphery of the seal body 5. The seal body 5 is formed in a tubular shape with a resin material that can be flexibly deformed as a whole, and has a plurality of openings so as to enable the intake and delivery of the fluid by setting the rotation posture of the valve body Va.

The valve body Va has two end disc portions 16 formed on a valve shaft 15 so as to rotate integrally with the valve shaft 15, an intermediate disc portion 17 disposed in the middle thereof, and a control wall portion 18 formed between the upper side and the lower side of the intermediate disc portion 17.

The flow path switching valve V has flow path switching spaces on the upper side and the lower side of the intermediate disc portion 17, and the control wall portion 18 controls the flow of the fluid in the flow path switching space when the valve body Va rotates about the valve axis X2 and the valve is set to a predetermined posture.

In the flow path switching valve V, the driving force of a valve drive motor 22 (an example of a valve drive unit) is decelerated by a gear reduction mechanism 23 and transmitted to the valve shaft 15. As a result, the rotation posture of the valve body Va about the valve axis X2 is set.

### [Manifold: Flow Path]

As illustrated in Fig. 2, in the manifold A, the screw pump P and the flow path switching valve V are disposed in an adjacent positional relationship. The housing H has a supply-side flow path 6 through which the fluid sucked from the input port 1 flows, and has the intermediate flow path 7 through which the fluid in a pressurized state is fed from the screw pump P. The intermediate flow path 7 is disposed between the screw pump P and the flow path switching valve V.

The housing H has a plurality of discharge-side flow paths 8 (an example of flow paths) through which the fluid in the pressurized state fed from the flow path switching valve V flows, and these discharge-side flow paths 8 (flow paths) communicate with corresponding ones of the output ports 2. Note that, in Fig. 2, an upper flow path 8a and a lower flow path 8b are illustrated as an example of the two discharge-side flow paths 8, and these flow paths individually communicate with any of the plurality of output ports 2.

With such a configuration, the manifold A performs control for supplying the fluid to at least one of the plurality of output ports 2 by setting the rotation posture of the valve body Va of the flow path switching valve V in a state where the screw pump P is rotationally driven when the fluid is controlled. In addition, the manifold A adjusts the opening degree by setting the rotation posture of the valve body Va of the flow path switching valve V, and performs control to adjust the flow rate of the fluid to be fed to the output port 2.

### [Control unit]

As illustrated in Figs. 1 and 2, the control unit 20 includes the pump drive motor 21 (pump drive unit), the valve drive motor 22 (valve drive unit), the gear reduction mechanism 23, a control board 24, and a control case 25 that accommodates these components.

The control case 25 has a structure capable of being waterproof and dustproof, and is provided with a connector unit 26 outside. A control device 27 and a power supply 28 are connected to the connector unit 26. A control signal of the control device 27 is transmitted to the control board 24 via the connector unit 26, and power is supplied from the power supply 28.

The pump drive motor 21 (pump drive unit) is connected to a pump shaft 11 of the screw pump P and rotationally drives the screw body Pa. The valve drive motor 22 (valve drive unit) transmits rotational driving force to the valve shaft 15 of the flow path switching valve V via the gear reduction mechanism 23 to control the rotation posture of the valve body Va.

The control board 24 includes a pump drive circuit 24a that supplies power supplied from the power supply 28 to the pump drive motor 21, and a valve drive circuit 24b that supplies power supplied from the power supply 28 to the valve drive motor 22.

The pump drive circuit 24a operates and stops the pump drive motor 21 by a control signal transmitted from the control device 27. The pump drive circuit 24a controls the rotation of the screw body Pa by driving the pump drive motor 21.

The valve drive circuit 24b operates and stops the valve drive motor 22 in accordance with a control signal transmitted from the control device 27. The rotational driving force of the valve drive motor 22 is transmitted to the valve shaft 15 via the gear reduction mechanism 23.

Although not illustrated in the drawings, the control unit 20 includes a rotation angle sensor such as a rotary encoder that detects the rotation posture of the valve body Va, and the valve drive circuit 24b sets the rotation posture of the valve body Va based on a feedback signal detected by the rotation angle sensor.

A brushless DC motor is used for the pump drive motor 21 and the valve drive motor 22. Therefore, the pump drive circuit 24a functions as a driver that supplies power to the plurality of coils of the pump drive motor 21. Similarly, the valve drive motor 22 functions as a driver that supplies power to the plurality of coils.

From this configuration, the manifold A pressurizes the fluid sucked from the input port 1 by the driving of the screw pump P and sends the fluid to the flow path switching valve V, and the flow path switching valve V sends the pressurized fluid to any selected from the plurality of discharge-side flow paths 8.

The discharge-side flow path 8 is connected to the output port 2, and the fluid sent from the output port 2 is supplied to the temperature adjustment target, thereby realizing temperature management of the temperature adjustment target. In addition, it is possible to switch between supply and stop of the fluid to the temperature adjustment target by control by the pump drive circuit 24a and the valve drive circuit 24b of the control board 24, and it is also possible to control the flow rate of the fluid by setting the rotation posture of the valve body Va.

### [Action and effect of the embodiment]

As described above, the manifold A includes the screw pump P. As a result, for example, the housing H can be downsized as compared with a pump having an impeller, and the fluid pressurized by the screw pump P can be sent to any of the plurality of output ports 2 by the flow path switching valve V.

In the manifold A, the pump axis X1 of the screw pump P is set in the vertical posture, and the valve axis X2 of the flow path switching valve V is set in the vertical posture parallel to the pump axis X1. As a result, the unnecessary space is reduced as compared with the case where the pump axis X1 and the valve axis X2 are set to intersect each other, and the drive structure in which the motor (Pump drive motor 21 and valve drive motor 22) is disposed above the screw pump P and the flow path switching valve V is simplified.

The control unit 20 protects the pump drive motor 21, the valve drive motor 22, the gear reduction mechanism 23, and the control board 24 by accommodating them in a control case 25 capable of being waterproof and dustproof and functions as a unit that can control the screw pump P and the flow path switching valve V while being a single unit.

In the control board 24, the pump drive circuit 24a supplies power supplied from an external power supply 28 to the pump drive motor 21, and the valve drive circuit 24b supplies power to the valve drive motor 22. As a result, the pump drive motor 21 and the valve drive motor 22 are controlled without using a plurality of boards.

### [Other embodiments]

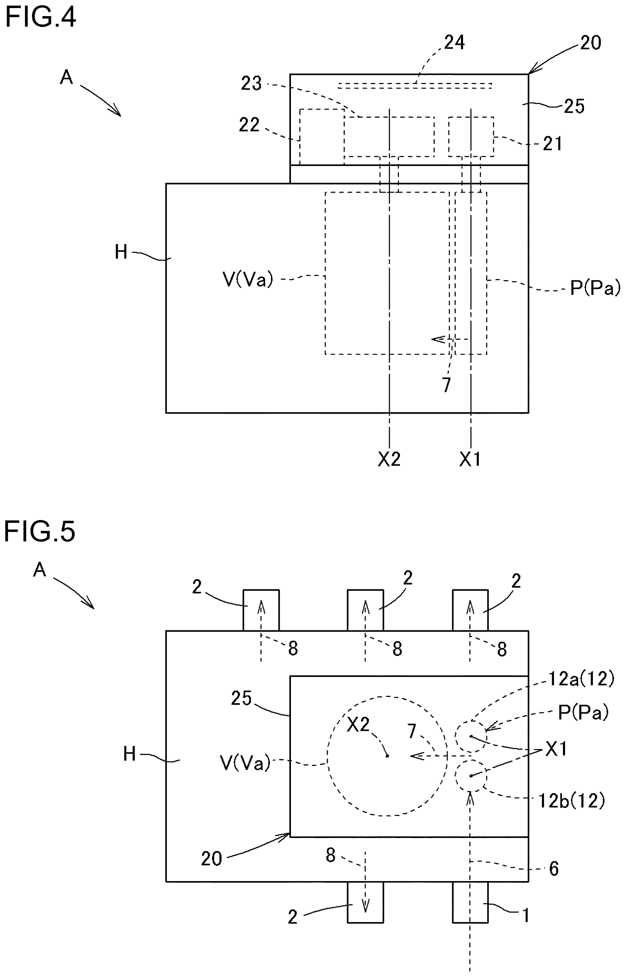

The present disclosure may be configured as follows in addition to the above-described embodiment (those having the same functions as those in the embodiment are designated by the same number and reference numeral as those in the embodiment).
(a) As illustrated in Figs. 4 to 6, the manifold A is configured by including the screw pump P having a pair of screw bodies Pa in a positional relationship in which the pump axes X1 are parallel to each other.

In the manifold A, the flow path configuration of the housing H and the configurations of the valve drive motor 22 and the control unit 20 are the same as those in the embodiment, but the configuration of the screw pump P is different from that in the embodiment.

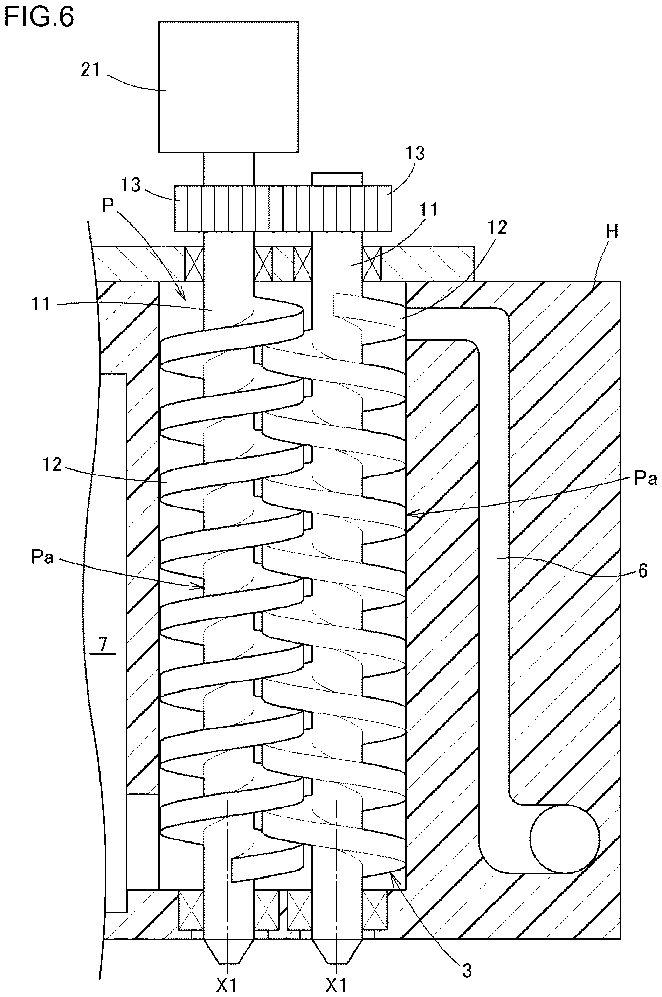

As illustrated in Fig. 6, in the screw pump P, the pair of screw bodies Pa is disposed in a positional relationship in which the spiral forming directions of the respective screw portions 12 are opposite to each other (for example, the relationship between the right screw and the left screw) and the respective screw portions 12 are interlocked (described as 12a and 12b in Fig. 5.).

In the screw pump P, in order to rotate the pump shafts 11 of the pair of screw bodies Pa in opposite directions, interlocking gears 13 having the same number of teeth are provided in an engaged state in the pair of pump shafts 11.

As in the embodiment, the control unit 20 is provided on the upper face of the housing H, and the pump drive motor 21, the valve drive motor 22, the gear reduction mechanism 23, and the control board 24 are accommodated in the control case 25.

As a result, in the another embodiment (a), one of the pump shafts 11 is rotationally driven by the pump drive motor 21, so that the pair of pump shafts 11 is reversed to send the fluid from the screw pump P in a pressurized state. That is, since the screw pump P has a configuration in which the screw portions 12 of the pair of screw bodies Pa are interlocked with each other, backflow of the fluid is suppressed, and the fluid can be sent in a state in which high pressure acts on the fluid.

In the configuration of the another embodiment (a), since the screw pump P is used, the housing H can be downsized as compared with a pump having an impeller, and the manifold A can be downsized. The fluid pressurized by the screw pump P is sent to any of the plurality of output ports 2 by the flow path switching valve V.

The screw pump P can also include three or more screw bodies Pa in a parallel posture. As the screw pump P, an eccentric screw pump can also be used.

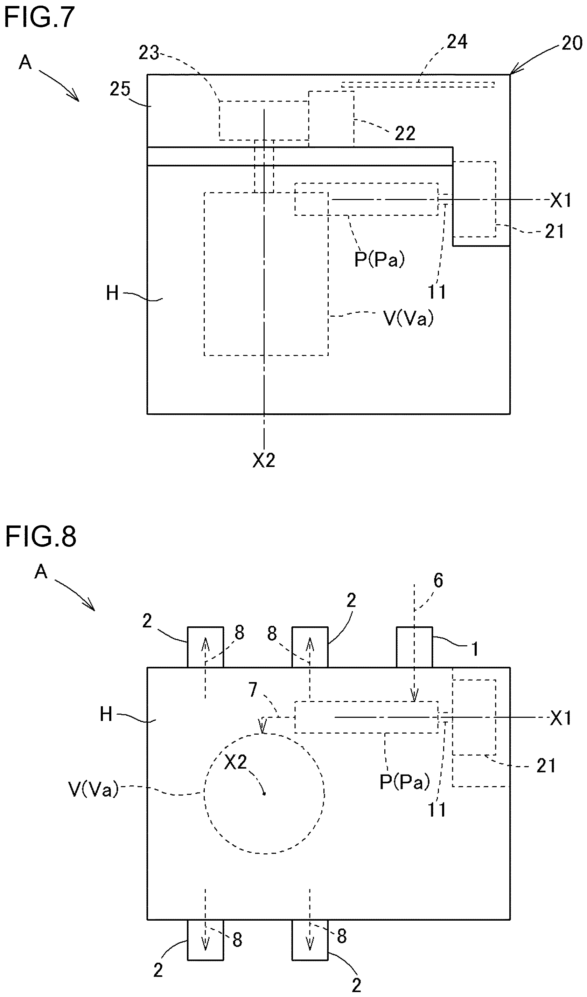

(b) As illustrated in Figs. 7 and 8, the manifold A is configured by setting the valve axis X2 in the vertical direction and setting the pump axis X1 in the horizontal direction orthogonal to the valve axis X2.

In the manifold A, the screw pump P is disposed at a position not overlapping with the flow path switching valve V in plan view at an upper position inside the housing H. In this configuration, the screw pump P can be disposed not only at the upper position inside the housing H but also at an intermediate position or a lower position in the vertical direction.

The screw pump P receives the fluid sucked from the input port 1 at an end position away from the flow path switching valve V, and sends the fluid to the flow path switching valve V in a pressurized state from an end position close to the flow path switching valve V via the intermediate flow path 7, and the flow path switching valve V sends the fluid in the pressurized state to any selected from the plurality of discharge-side flow paths 8.

The manifold A includes a pump drive motor 21 on a side face of the housing H. Therefore, the control unit 20 is provided in a region from the upper face to the side face of the housing H. The control case 25 accommodates the valve drive motor 22, the gear reduction mechanism 23, and the control board 24.

In the manifold A of the another embodiment (b), the housing H can be downsized, as compared with a pump having an impeller, and the manifold A can be downsized. In the manifold A, the internal space of the housing H can be effectively used by disposing the screw pump P in the dead space inside the housing H, and the degree of freedom in design is also improved.

Further, in the another embodiment (b), as described in the another embodiment (a), it is also possible to use a screw pump P using a pair of screw bodies Pa. A screw pump P including three or more screw bodies Pa in parallel postures can also be used, and an eccentric screw pump P can also be used.

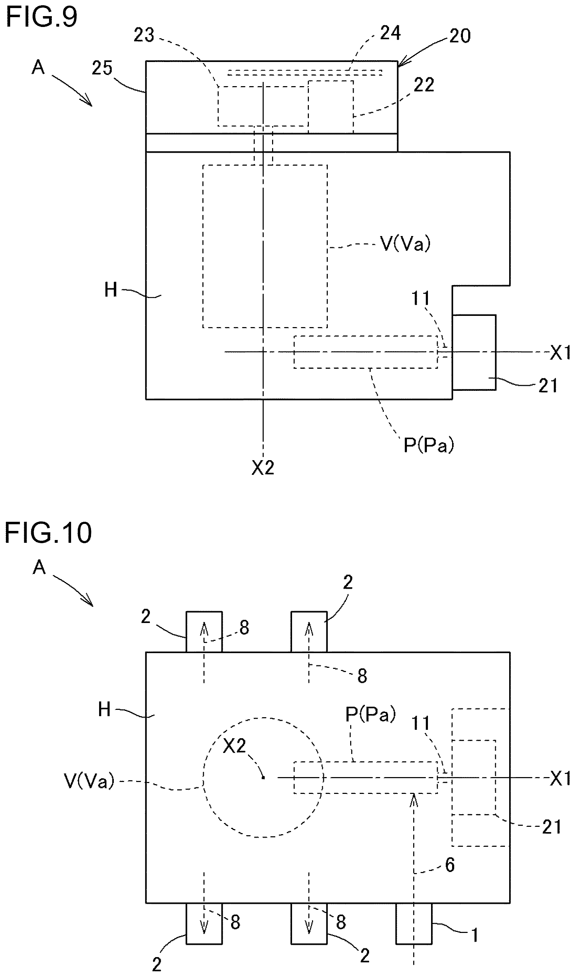

(c) As illustrated in Figs. 9 and 10, the manifold A is configured by setting the valve axis X2 in the vertical direction and setting the pump axis X1 in the horizontal direction orthogonal to the valve axis X2. In the manifold A, the screw pump P is disposed at a lower position inside the housing H and at a position overlapping the lower side of the flow path switching valve V in plan view.

The screw pump P receives the fluid sucked from the input port 1 at an end position away from the flow path switching valve V, and sends the fluid to the flow path switching valve V in a pressurized state from an end position close to the flow path switching valve V via the intermediate flow path 7, and the flow path switching valve V sends the fluid in the pressurized state to any selected from the plurality of discharge-side flow paths 8.

The manifold A includes the pump drive motor 21 at a lower position of a side face of the housing H. Therefore, the valve drive motor 22, the gear reduction mechanism 23, and the control board 24 are accommodated in the control case 25 of the control unit 20 disposed on the upper face of the housing H, and the pump drive motor 21 is not accommodated.

In the manifold A of the another embodiment (c), the screw pump P and the flow path switching valve V are disposed so as to overlap each other in plan view, thereby the housing H can be downsized in plan view. In addition, with this configuration, the internal space of the housing H can be effectively used, such as disposing the screw pump P in a dead space inside the housing H, and the degree of freedom in design is also improved.

In addition, the another embodiment (c) is not limited to the configuration in which the screw pump P is disposed in the dead space at the bottom of the housing H, for example, and the screw pump P can be disposed at a position overlapping the flow path switching valve V in plan view at the upper position of the housing H. As a result, the internal space of the housing H can be effectively used, and the degree of freedom in design is also improved.

Further, in the another embodiment (c), as described in the another embodiment (a), it is also possible to use a screw pump P using a pair of screw bodies Pa. A screw pump P including three or more screw bodies Pa in parallel postures can also be used, and an eccentric screw pump P can also be used.

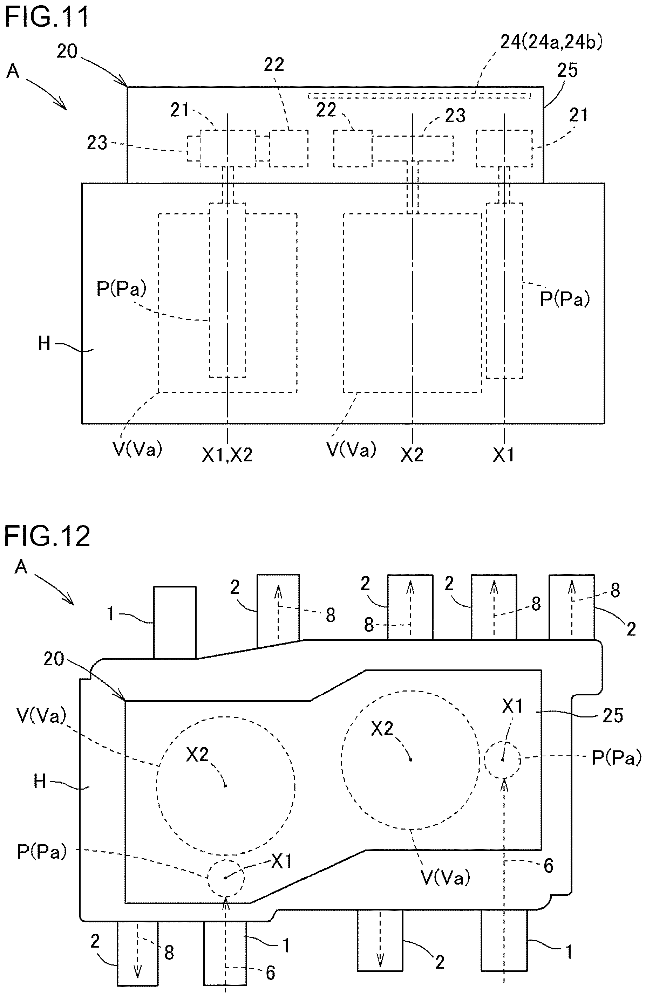

(d) As illustrated in Figs. 11 and 12, a plurality of (two in the another embodiment) screw pumps P and a plurality of (two in the another embodiment) flow path switching valves V are provided in the housing H to constitute the manifold A. The manifold A includes the single control unit 20 on the upper face of the housing H.

In the another embodiment (d), the pump axis X1 of each of the plurality of screw pumps P and the valve axis X2 of each of the plurality of flow path switching valves V is in a posture parallel to each other.

In the control unit 20, a plurality of (two in the another embodiment) pump drive motors 21, a plurality of (two in the embodiment) valve drive motors 22, a plurality of (two in the another embodiment) gear reduction mechanisms 23, and a single control board 24 are accommodated in the control case 25.

In the control unit 20, the pump drive circuit 24a of the control board 24 controls the plurality of pump drive motors 21, and the valve drive circuit 24b of the control board 24 controls the plurality of valve drive motors 22.

Since the manifold A of the another embodiment (d) includes the screw pump P, the housing H can be downsized as compared with a pump having an impeller, and the manifold A can be downsized. The fluid pressurized by the screw pump P is sent to any of the plurality of output ports 2 by the flow path switching valve V.

As described in the another embodiment (a), the another embodiment (d) can be configured by including the screw pump P including a pair of screw bodies Pa. A screw pump P including three or more screw bodies Pa in parallel postures can also be used, and an eccentric screw pump P can also be used.

Note that the configuration disclosed in the above-described embodiments (including another embodiment, the same applies hereinafter) can be applied in combination with the configuration disclosed in other embodiments as long as there is no contradiction, and the embodiments disclosed in the present specification are an example, and the embodiments of the present disclosure are not limited thereto, and can be appropriately modified without departing from the object of the present disclosure.

In the above-described embodiment, the following configuration is conceived.
(1) A manifold including the housing H having a plurality of flow paths (discharge-side flow paths 8) formed therein and the input port 1 that receives a fluid flowing into the flow paths, wherein the screw pump P that sends the fluid flowing from the input port 1 to the flow paths and the flow path switching valve V that controls a flow of the fluid flowing through the flow paths (discharge-side flow paths 8) are accommodated in the housing H.

With this configuration, the fluid received from the input port 1 is pressurized by the screw pump P accommodated in the housing H and sent to the flow path switching valve V, and the flow path switching valve V controls the flow of the fluid, so that the fluid can be pressure-fed to a flow path selected from the plurality of flow paths (discharge-side flow paths 8). In addition, the screw pump P can be reduced in diameter as compared with a pump having an impeller, and can suppress an increase in size of the housing H.

(2) It is preferable that, in the manifold A of (1), the screw pump P includes the screw body Pa that rotates about the pump axis X1, the flow path switching valve V includes the valve body Va that rotates about the valve axis X2, and the valve axis X2 of the flow path switching valve V and the pump axis X1 of the screw pump P are parallel to each other.

With this configuration, by disposing the valve axis X2 and the pump axis X1 in parallel, the flow path switching valve V and the screw pump P are brought close to each other, and a wasteful space is reduced, and the housing H can be downsized.

(3) It is preferable that the manifold A of (1) or (2) further includes the control unit 20, and the control unit 20 is integrated with the housing H in a state where the pump drive unit (pump drive motor 21) that rotationally drives the screw body Pa about the pump axis X1, the valve drive unit (valve drive motor 22) that drives and rotates the valve body Va about the valve axis X2, and the control board 24 that controls the operations of the pump drive unit (pump drive motor 21) and the valve drive unit (valve drive motor 22) are accommodated in one control case 25.

With this configuration, the pump drive unit (pump drive motor 21), the valve drive unit (valve drive motor 22), and the control board 24 that controls these units are accommodated in one control case 25 and integrated with the housing H, so that, for example, a configuration for waterproofing and dustproofing is simplified as compared with a configuration in which the pump drive motor 21 and the valve drive motor 22 are separately provided on the outer face of the housing H, and the control board 24 is reasonably disposed.

(4) It is preferable that, in the manifold A of any one of (1) to (3), the control board 24 includes the pump drive circuit 24a that supplies power supplied from the power supply 28 to the pump drive unit (pump drive motor 21) and the valve drive circuit 24b that supplies power supplied from the power supply 28 to the valve drive unit (valve drive motor 22).

Accordingly, the power supplied from the power supply 28 can be supplied from the pump drive circuit 24a of the control board 24 to the pump drive unit (pump drive motor 21), and can be supplied from the valve drive circuit 24b of the control board 24 to the valve drive unit (valve drive motor 22). Accordingly, it is not necessary to provide two dedicated boards for supplying power to the pump drive unit (pump drive motor 21) and the valve drive unit (valve drive motor 22).

The present disclosure can be used for a manifold.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A manifold (A) comprising: a housing (H) having a plurality of flow paths formed therein and an input port (1) that receives a fluid flowing into the flow paths,
wherein a screw pump (P) that sends the fluid flowing in from the input port (1) to the flow path, and a flow path switching valve (V) that controls a flow of the fluid flowing through the flow path are accommodated in the housing (H).

2. The manifold (A) according to Claim 1,
wherein the screw pump (P) includes a screw body (Pa) that rotates about a pump axis (X1),
wherein the flow path switching valve (V) includes a valve body (VA) that rotates about a valve axis (X2), and
wherein the valve axis (X2) of the flow path switching valve (V) and the pump axis (X1) of the screw pump (P) are parallel to each other.

3. The manifold (A) according to Claim 2, further comprising: a control unit (20),
wherein the control unit (20) is integrated with the housing (H) in a state where a pump drive unit that drives and rotates the screw body (Pa) about the pump axis (X1), a valve drive unit that rotationally drives the valve body (Va) about the valve axis (X2), and a control board (24) that controls operations of the pump drive unit and the valve drive unit are accommodated in one control case (25).

4. The manifold (A) according to Claim 3, wherein the control board (24) includes a pump drive circuit (24a) that supplies power supplied from a power supply (28) to the pump drive unit, and a valve drive circuit (24b) that supplies power supplied from the power supply (28) to the valve drive unit.
